# EUROPEAN PATENT APPLICATION

(11) **EP 2 873 408 A1**
(43) Date of publication of application: **20.05.2015**
(21) Application number: 14020074.2
(22) Date of filing: 05.11.2014
(51) Int. Cl.: A61H 23/02, A61H 19/00, H02J 7/34

(54) **Sexual stimulation aids powered by ultracapacitor**

(30) Priority: 14.11.2013 GB 201320119
(71) Applicant: Rocks off Limited, Northhamptonshire NN16 9QJ (GB)
(72) Inventor: Marschal, Ian Peter, Kettering NN16 9QJ, Northamptonshire (GB)

(57) **Abstract**

Sexual stimulation aids powered by at least one ultracapacitor which may or may not be used in conjunction with one or more rechargeable and non-rechargeable batteries. One of the main advantages of the sexual stimulation aids powered by an ultracapacitor is that the devices get charged in a short period of time.

## Description

### Field of the Invention

The present invention pertains to massagers in general and, more particularly, to sexual stimulation aids powered by at least an ultracapacitor.

This application claims priority to UK Patent Application No. GB1320119.9 filed on 14 November 2013, the entirety of which is incorporated herein by reference.

### Background of the Invention

Personal massagers, whether as medical device or sexual stimulation device/aid, are widely used by many people. Sexual stimulation devices are also known as adult toys/massager or sex toys. All the conventional adult massagers are either powered by rechargeable or non-rechargeable batteries.

The rechargeable batteries are becoming more and more popular now-a-days as they are more cost effective for long term use. A typical rechargeable battery comprises one or more electrochemical cells in which electrochemical reactions take place for charging and discharging of energy. In the conventional rechargeable batteries, different combination of chemicals are used, such as lead-acid, nickel cadmium (NiCd), nickel metal hydride (NiMH), lithium ion (li-ion).

The conventional batteries, which are rechargeable, can be charged repeatedly for perpetual use. However, the conventional rechargeable batteries take time to get charged. For example, a Li ion battery of 3.7 volts and 200 mAh capacity takes at least 1 hour to get charged.

General comparative analysis between supercapacitor/ultracapacitor and battery (Li-ion cell) is given below:

| Function | Supercapacitor/Ultracapacitor | Lithium-ion battery (general) |
|---|---|---|
| Charge time | *1-10 seconds* | *10-60 minutes* |
| Cycle life | *1 million or 30,000h* | *500 and higher* |
| Cell voltage | *2.3 to 2.75V* | *3.6 to 3.7V* |
| Specific energy (Wh/kg) | *5 (typical)* | *100-200* |
| Specific power (W/kg) | *Up to 10,000* | *1,000 to 3,000* |
| Service life (in vehicle) | *10 to 15 years* | *5 to 10 years* |
| Charge temperature | *-40 to 65°C (-40 to 149°F)* | *0 to 45°C (32° to 113°F)* |
| Discharge temperature | *-40 to 65°C (-40 to 149°F)* | *-20 to 60°C (-4 to 40°F)* |

The electric double-layer capacitor effect was first noticed in late 1950s. Unlike conventional capacitor, an ultracapacitor utilizes the phenomena typically referred to as the 'electric double layer'. In the double layer capacitor, a high capacitance arises from the charge stored at the interface by changing electric field between anode and cathode. The electrolytes used in the ultracapacitor are either water-soluble or non-water soluble. For the purpose of description of this invention, 'ultracapacitor' and 'supercapacitor' are being used interchangeably.

There are many drawbacks of the adult massagers powered by rechargeable or non-rechargeable batteries. It so happens quite often that an adult massager runs out of power during masturbation or foreplay. Once the power is exhausted during masturbation or foreplay, the adult massager with conventional rechargeable battery takes a long time get charged again, which potentially kills the momentum of sexual excitement towards an orgasm or climax. This kind of situation can be really frustrating for the user of adult massager, which can, in turn, cause psychological stress to the user of adult toys. This problem can be overcome to a certain extent if we keep charged replaceable battery ready, provided the rechargeable battery of the massager is replaceable. But having an extra battery, rechargeable or otherwise, will always put burden of extra cost on the users.

There are mechanisms/methods for rapid charging of rechargeable batteries; however these mechanisms/methods come with the risk of overcharging and overheating which can damage the battery irreversibly. None of the batteries, even with the rapid charging mechanism/method, can be charged as fast as an ultracapacitor can be.

One of the biggest problems facing conventional sexual stimulation aids is the outward appearances that could be objectionable or/and harmful to many people, especially the children. So, one of the challenges faced by the adult toy users is how to use it discreetly, without exposing the same to people who might find it objectionable. These sorts of challenges become more profound when the adult toys resemble, in appearance, human genitals. For any adult toy user, there is always a fear or anxiety of feeling embarrassed when someone, who does not approve of such devices, comes to know about them.

The highest risk of an adult massager being exposed to others is when the device is put on charging, as the electric plugs or sockets are usually placed or found in the areas which are easily visible and accessible by everyone. The chances of adult toys being noticed by others is directly proportional to the length of time the device is kept in the areas which are easily accessible or visible by all.

When an adult massager with conventional rechargeable batteries is to be charged, it needs to be left on a charging cradle or a plug point, which is generally found in the common area, for at least 1 hour or so. So the risk of the device being noticed by others is extremely high during such period which can be termed as 'high risk period'. Even a detachable battery alone is put on charging in a common area, there is always a risk of provoking curiosity to any onlookers.

In order to overcome the problems/risk associated with unwanted/unintended/accidental exposure of adult toys during such 'high risk period', many use cover on or around them to conceal the device from others, which again can easily provoke curiosity to anybody who sees them. Some people, during such 'high risk period', stay in the vicinity of the charging point for an hour or so, just to make sure that nobody gets to know what is being put on charging the adult toys. Therefore, the users, many a times, have to wait for an opportune moment for charging. Probably the best solution for such circumstances is to minimize the charging time.

Some of the adult massagers in the market use cover to conceal the device itself when the device is put on charging. One such product is a product manufactured and sold by Standard Innovation Corporation, Canada, by the name "We-Vibe 3" which comes with a cover for covering the massager when the same is put on induction docking station for charging.

Another way to get round is to employ long electric cable wire or/and extension cord to charge the device in a remote place in the house, which is costly and cumbersome. Such arrangement may also provoke curiosity to others.

U.S. Patent No. 5,470,303 (Leonard et al*)* discloses a massager which employs a housing to conceal the true nature of the device.

It is an object of this invention to provide adult massagers powered by at least an ultracapacitor to overcome the drawbacks of existing adult massagers in prior art.

### Summary of the Invention

*Accordingly, the present invention provides sexual stimulation aids of any design or shape or size powered by at least one ultracapacitor which may or may not be used in conjunction with one or more rechargeable or non-rechargeable batteries.*

One of the main advantages of the massager powered by an ultracapacitor is that Ultracapacitor takes very less time to get charged. In case of power being run out during masturbation and foreplay, an adult massager with ultracapacitor can be charged within 10-15 seconds and can help maintain the momentum of sexual excitement or libido.

In a further advantage of the invention, the adult massagers with ultracapacitor as source of power can perform efficiently at very low temperature (down to - 40 degree centigrade) and at high temperature, as opposed to the conventional batteries which cannot function well when the room temperature is below -20 degree centigrade.

Another advantage of the invention is that due to the very short recharge time of the ultracapacitor, it is easy to maintain discreet identity of the massager, irrespective of the outer appearance of the devices, and irrespective of whether or not there are many people around them. It is much easier to conceal the adult massager when it takes only 10-20 seconds for charging.

Another advantage of the invention is that the organic electrolyte, which is a carbon-based, used in the ultracapacitor is easy to manufacture and does less harm to environment than the other forms of batteries. So when the adult toy is disposed of, very less harm is done to the environment.

Another advantage of the invention is that the adult massager with ultracapacitor is safer than the adult massagers which use other forms of batteries. In case of any defects, massagers with conventional batteries may explode and catch fire and cause more harm than an ultracapacitor-powered massager.

A further advantage of the invention is that adult massagers with ultracapacitors need minimum maintenance as opposed to the conventional batteries which require more elaborate arrangement for maintenance.

Another advantage of the invention is that an ultracapacitor does not get damaged when it is fully discharged. However, the conventional rechargeable battery gets damaged when the secondary cell in it is kept in fully discharged state for a longer period of time.

In one embodiment, at least one ultracapacitor is employed in conjunction with one or more rechargeable batteries to power the adult massagers.

In an alternative embodiment, only one or more ultracapacitors is/are used to power the adult massager.

In another embodiment, overcharge protection circuits are employed for both conventional rechargeable batteries and ultracapacitors.

In a further embodiment, the ultracapacitor and rechargeable battery can be used at the same time as power source.

In an alternative embodiment, either rechargeable battery or the ultracapacitor can act as back-up power source to one another.

In a further embodiment, the ultracapacitor(s) or/and the rechargeable batteries may be detachable from the main body of the adult massager.

### Brief description of the Drawings

*The invention will now be described by way of example and with reference to the accompanying drawings*, *in which:*
**Fig. 1** shows plan and sectional view of an adult massager powered by an ultracapacitor and a rechargeable battery.
**Fig. 2** shows plan and sectional view of an adult massager powered by an ultracapacitor only.
**Fig. 3** is the electric circuit diagram of the adult massager in Fig. 1.
**Fig. 4** is the electric circuit diagram of the adult massager in Fig. 2.

### Detailed description of the Invention

With reference to the figures, the invention is being described herein by way of example only.

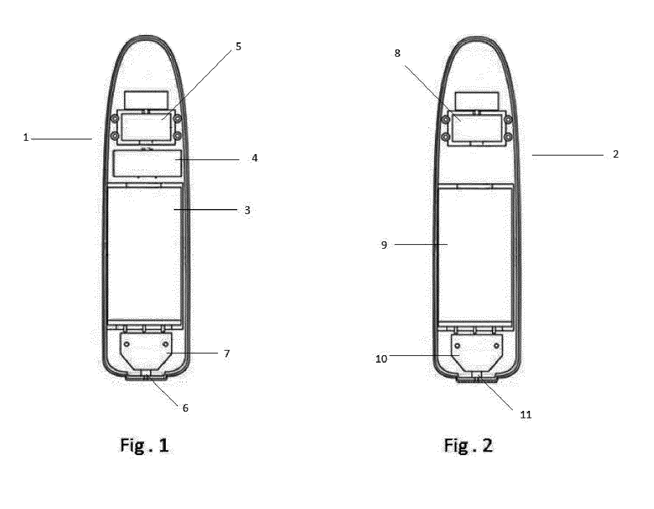

Referring initially to **Fig. 1****,** there is shown an illustrative plan and sectional view of an adult massager **1** which has an ultracapacitor **3** as power source for a motor **5.**

Referring to **Fig. 2****,** there is shown an illustrative plan and sectional view of an adult massager **2** which has only ultracapacitor **9** as power source for a motor **8.**

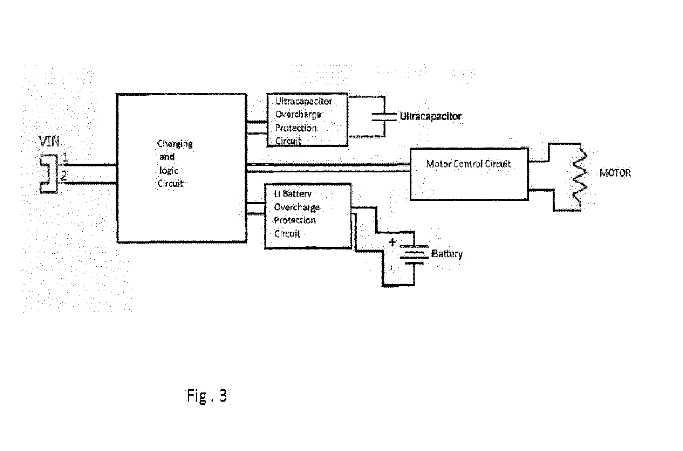

Referring to **Fig. 3****,** there is shown an electric circuit diagram of the adult massager **1** shown in **Fig. 1****.**

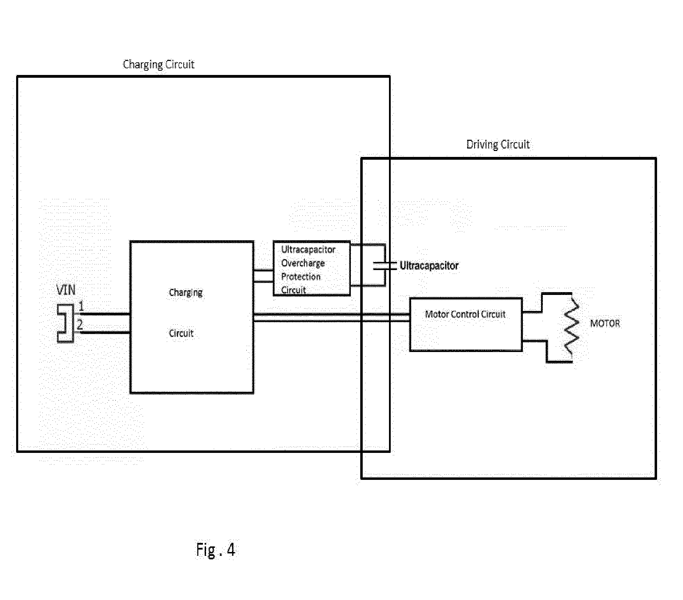

Referring to **Fig. 4****,** there is shown an electric circuit diagram of the massager **2** shown in **Fig. 2****.**

The adult massagers shown in **Fig. 1** and **Fig. 2** are hypothetical ones. The positioning of the various components (the Ultracapacitor **3,** the Battery **4,** the Motor **5,** etc.) in the adult massager **1** may vary from design to design, depending on factors like available space inside the devices. Depending on the power requirement or/and space available inside an adult massager, one or more ultracapacitor may be employed with one or more rechargeable batteries. Even the shape and size of the Ultracapacitor **3** and the Battery **4** may be dictated by the interior and exterior design of adult massagers **1.** Similarly, the positioning of the components in (the Ultracapacitor **9,** the motor **8,** etc) in the adult massager **2** may vary from design to design.

During the operation of the adult massager **1,** the Ultracapacitor **3** and the Battery **4** supply power to the Motor **5** through the logic circuit. The power from the Battery **4** or/and Ultracapacitor **3** goes to the Motor **5** through the Motor Control Circuit as shown in **Fig. 3****.** During the operation of the adult massager **2,** the Ultracapacitor **9** is used as the only source of power; the power goes to the Motor **8** through the logic circuit. In case of multiple ultracapacitor or/and multiple batteries, the power supply will follow the same electrical circuit as given in **Fig. 3****.**

The Motor Control Circuit, which could also be an integrated circuit chip (IC), uses a pulse wave modulation (PWM) chip to create pulses of power to the Motor **5** at delays specified during the programming of the devices. An input button allows logic selection of a number of different programming states within the chip, thus allowing adult massagers **(1, 2)** to have multiple "patterns" of vibration or/and actuation or/and heating.

During recharging of the adult massagers **1** and **2,** voltage comes in at the "VIN" (Voltage Input) Port **(6, 11)** from an external source (USB device, or mains adapter or other such method). In the adult massager **1,** the logic circuit supplies the Ultracapacitor **3** with the correct voltage and current to charge them safely, charging the Ultracapacitor **3** at a high current while allowing the battery **4** to charge safely at its rated input.

Battery **4** and ultracapacitor **3** in the adult massager **1** are fitted with small circuits called 'overcharge protection circuit' that prevent overcharging by changing state when they are full. The logic and charging circuit detects this and stops trying to charge the device beyond fully charged state. In the adult massager **2** also, overcharging protection circuit is employed to stop overcharging of the device.

The PCB (7, **10)** in the adult massager **1** and **2** are printed circuit board that contains the electrical components required for the devices **(1, 2)** to function as desired. They include the charging IC, the motor control electronics (such as PWM & timer chip) and required resistors, diodes, button switches for inputs and any other circuit component as required by a particular device.

*The above given description of the invention is by way of example only to illustrate, and in no way does it limit the scope of claimed invention.*

## Claims

1. A sexual stimulation aid comprising at least one ultracapacitor as a source of power.

2. A sexual stimulation aid as claimed in claims 1, wherein the ultracapacitor is utilised to power either a motor employed as a means to produce vibration or actuation, or as a power source to create a heating sensation or/and electric current stimulation.

3. A sexual stimulation aid as claimed in Claims 1 and 2, wherein one or more input buttons are employed to select different patterns of vibration or actuation or heating.

4. A sexual stimulation aid as claimed in claim 1, wherein the overcharge protection circuit is employed to prevent overcharging of the sexual stimulation aid.

5. A sexual stimulation aid comprising at least one ultracapacitor and one or more rechargeable or non-rechargeable battery as power source.

6. A sexual stimulation aid as claimed in claim 5, wherein at least a motor is employed as means to produce vibration or actuation in the device.

7. A sexual stimulation aid as claimed in claims 5 and 6, wherein one or more input buttons are employed to select different patterns of vibration or actuation.

8. A sexual stimulation aid as claimed in claim 5, wherein the overcharge protection circuit is employed to prevent overcharging of the sexual stimulation aid.
